# EUROPEAN PATENT SPECIFICATION

(11) **EP 0 400 255 B1**
(45) Date of publication and mention of the grant of the patent: **08.01.1997**
(21) Application number: 89830187.4
(22) Date of filing: 03.05.1989
(51) Int. Cl.: G05B 15/02

(54) **Electronic music stand unit**
Elektronischer Musiknotenständer
Pupitre de musicien électronique

(43) Date of publication of application: 05.12.1990
(73) Proprietor: Mitidieri, Antonio, I-74100 Taranto (IT)
(72) Inventor: Mitidieri, Antonio, I-74100 Taranto (IT)
(74) Representative: Checcacci, Giorgio

(56) References cited:
- FR-A- 2 282 666
- GB-A- 2 035 664
- GB-A- 2 204 440
- US-A- 4 366 741

## Description

The electronic music stand unit is made up by :
1) a control unit
2) a mass memory containing sequence - type and music notes shown on the pentagram and connected to the control unit input
3) a display unit connected to the control unit output as to visualize on pentagrams the sequence of music notes on run

Furthermore additional commands, as to have the scanning of pentagrams as well as the non stop display of the whole music score, are forecast .

### ELECTRONIC MUSIC STAND OBJECTIVES

### CURRENT SITUATION

Every musician has the following problems :
a) he must manually turn, time by time, the music papers thus interrupting his performance
   OR
b) he needs the support of someone able to read the music score and turn its pages for him
c) in the case of open air performances, music papers may be subjected to atmospherical precipitatios.

An electronic music stand device of known type is disclosed in the US patent No. 4,366,741.

Such a device includes a display screen and an electronic control unit connected to the display screen.

However, in that document nothing is provided for allowing the musician to command the scrolling of the music score displayed on the screen.

### FUTURE SITUATION

Under the electronic music stand usage the above mentioned restrictions are thus eliminated .

The electronic music stand unit can be placed everywhere and easily used from the involved musician .

### ELECTRONIC MUSIC STAND FEATURES

Its own characteristics and advantages are shown on the following pictures .
- Pict. 1: shows its prospectic body wiew
- Pict. 2: shows its control unit assembled into his frame as shown in Pict. 1

In addition, Pict 1 shows the whole device made up by the following components :
a) a ground basement
b) a supporting rod (installed into the basement)
c) a video display assembled on the top of supporting rod

### ELECTRONIC MUSIC STAND - HARDWARE DESCRIPTION AND CABLING CONNECTION

### GROUND BASEMENT (Code n° 2) - Picture n° 1 .

Its is a synthetic plastic box structure.

Its contains an electronic control unit (Code n° 8) as well as a mass memory that includes a disk drive (Code n° 9) - a reader (Code n° 10) for magnetic disk (Code n° 11) .

### SUPPORTING ROD (Code n° 3) .

This tube contains the cabling lines (Code n° 23) connecting the video (Code n° 4) with the basement (Code n° 2)

### VIDEO DISPLAY

The video (Code n° 4) may be of a plasma type or a liquid crystal screen type both having reduced tickness, compactability and light weight .

The video (Code n° 4) is assembled at the top of the rod (Code n° 3) in a loosen form as to permit the best usage position .

### GROUND BASEMENT (Code n° 2 - Picture n° 2 .

Picture n° 2 shows a schematic wiew of the electronic cicuit board (Code n° 12) that includes a feeded microprocessors (Code n° 13) - ROM (Code n° 14) - RAM (Code n° 15) - Input interface (Code n° 16) and Output Interface (Code n° 17) .

The microprocessor (Code n° 13) that is provvided of a clock (Code n° 24), is connected to the remaining components of the board (code n° 12) trougth electrical connections so called "bus" .

In addition, picture 2 shows the data bus (Code n° 18) the logical address bus (Code n° 19) and the control bus (Code n° 20) .

The mass memory (Code n° 9) and particularly the magnetic disk kneader (Code n° 10) are connected to the corresponding unit input (Code n° 8) by the input interface (Code n° 16), while the video (Code n° 4) is connected to the output unit (Code n° 8), by the output interface (Code n° 17) .

In addition, a pedal command that includes a push button (Code n° 21) connected by a tenant (code n° 22) to the interface (Code n° 16) of the input unit (Code n° 8) is forecast .

The push button (Code n° 21) can by easily used in accordance with the scanning needs .

At last, the ground basement - the supporting rod and the video make up the whole unit in a well accepted shape profile .

### ELECTRONIC MUSIC STAND FUNCTIONING

The mass memory (Code n° 9), and particulary the magnetic disk (Code n° 11) are both dedicated to contain all those data concerning the sequence type and pentagram position of the music score in run .

The memory (Code n° 14) that reads only the unit (code n° 8) contains specifical software programmes dedicated to manage the unit (code n°8) as well as the disply (Code n° 4) in accordance with those data contained in the disk (Code n° 11) .

Once the disk (Code n° 11) is put inside the reader (Code n° 10), the unit (Code n° 8) will load inside the memory (Code n° 15) all those data concerning the music score in run and display on the screen (Code n° 5) the pentagrams realized under a specifical graphic management program .

Therefore, the musician will easily read and follow on the video (Code n° 5) the music score in run . In addition, by actioning with his feet the pedal push button (Code n° 21), the user will command the unit (Code n° 8) to generate an automatic refreshment of the memory (Code n° 15) as to obtain a video image scrolling action thus visualizing the other pentagrams .

Obviously, by programming the memory (Code n° 14) an automated up dating of the video screen may be made. Then the video image scanning may be obtainedon the base of a timing action that is defined by the music rhythm in run and by the timing action of the clock (Code n° 24) that is inside the unit (code n° 8) .

In addition, the electronic music stand device may includes optional standard tool permitting to select a music score among a menu that is displayed on the screen (Code n° 5) once a disk is put inside the reader (Code n° 10) .

According ti his inventor, the electronic music stand unit has the great advantage to give the misician a non stop vision of the music score in run . At last, another big advantage of this invention is given by its well preciate outward appearance.

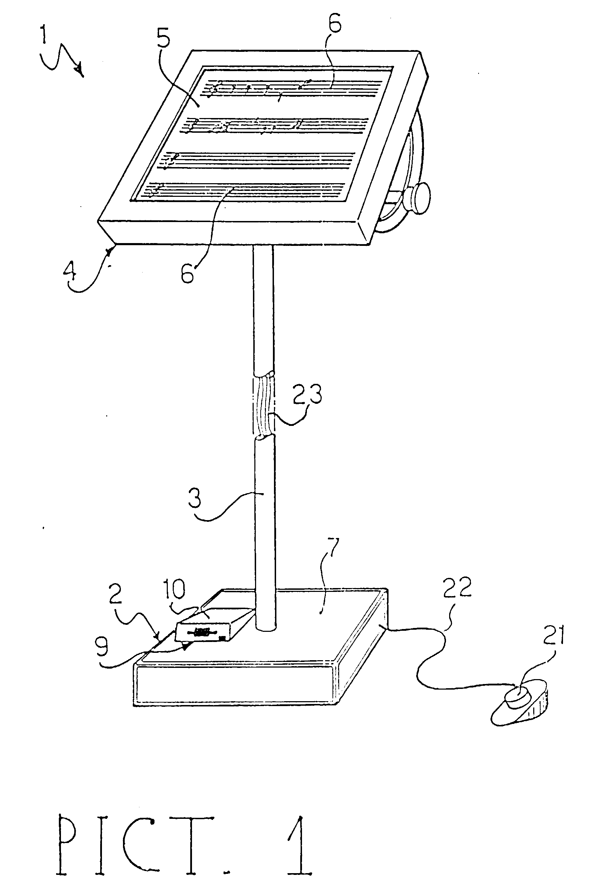

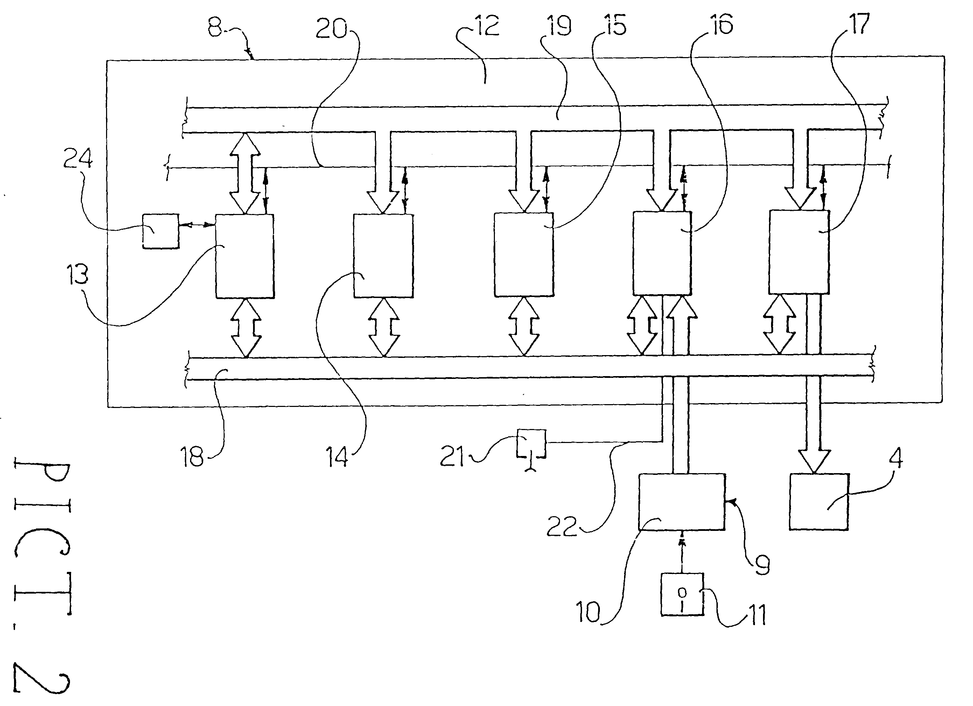

## Claims

1. An electronic music stand device for displaying a musical score, of the type comprising a display screen (4), an electronic control unit (8) connected to the display screen (4) through a bus or cabling lines (23), characterized in that it comprises:
- a memory unit (14, 15) associated with the electronic control unit (8) for storing musical score information, in the form of sequence type and musical score position data, and
- a command (21) connected to the control unit (8) for allowing the scrolling of the musical score displayed on the screen (4).

2. An electronic music stand device according to claim 1, characterized in that said screen (4) is a liquid crystal and/or plasma type screen.

3. An electronic music stand device according to claim 1, characterized in that said command (21) is a push button pedal connected by an electrical cable (22) to the control unit (8).

4. An electronic music stand device according to claim 1, characterized in that the memory unit includes a magnetic disk reader (10).

5. An electronic music stand device according to claim 1, characterized in that it further includes, in the electronic control unit (8), a microprocessor (13), ROM and/or RAM memory, an input inteface (16) connected to said command (21) and an output interface (17) connected to the display screen (4).

6. An electronic music stand device according to claim 1, characterized in that it comprises a base (2) and a supporting rod (3) erected on the base (2), said display screen (4) being flexibly mounted on the top of the supporting rod (3) making up with the base (2) and the rod (3) the whole electronic music stand device.

7. An electronic music stand device according to claim 6, characterized in that said base (2) contains the electronic control unit (8) and the memory unit.

## Patentansprüche

1. Elektronische Musiknotenständervorrichtung, die eine Partitur anzeigt und von einem Typ ist, der einen Anzeigebildschirm (4) und eine elektronische Steuereinheit (8) enthält, die mit dem Anzeigebildschirm (4) über einen Bus oder über Leitungen (23) verbunden ist, dadurch gekennzeichnet, daß sie enthält:
- eine Speichereinheit (14, 15), die zu der elektronischen Steuereinheit (8) gehört und Partiturinformation in aufeinanderfolgender Form sowie Partiturpositionsdaten speichert, und
- eine Befehlseinheit (21), die mit der Steuereinheit (8) verbunden ist und das Rollen der auf dem Bildschirm (4) angezeigten Partitur ermöglicht.

2. Elektronische Musiknotenständervorrichtung nach Anspruch 1, dadurch gekennzeichnet, daß der Bildschirm (4) ein Bildschirm des Flüssigkristalltyps und/oder des Plasmatyps ist.

3. Elektronische Musiknotenständervorrichtung nach Anspruch 1, dadurch gekennzeichnet, daß die Befehlseinheit (21) ein Druckknopfpedal ist, das durch ein Elektrokabel (22) mit der Steuereinheit (8) verbunden ist.

4. Elektronische Musiknotenständervorrichtung nach Anspruch 1, dadurch gekennzeichnet, daß die Speichereinheit eine Magnetplatten-Leseeinheit (10) enthält.

5. Elektronische Musiknotenständervorrichtung nach Anspruch 1, dadurch gekennzeichnet, daß sie ferner in der elektronischen Steuereinheit (8) einen Mikroprozessor (13), einen ROM- und/oder RAM-Speicher, eine Eingangsschnittstelle (16), die mit der Befehlseinheit (21) verbunden ist, sowie eine Ausgangsschnittstelle (17) enthält, die mit dem Anzeigebildschirm (4) verbunden ist.

6. Elektronische Musiknotenständervorrichtung nach Anspruch 1, dadurch gekennzeichnet, daß sie einen Fuß (2) sowie eine Tragstange (2) enthält, die vom Fuß (2) nach oben vorsteht, wobei der Anzeigebildschirm (4) am oberen Ende der Tragstange (3) beweglich angebracht ist und mit dem Fuß (2) und der Stange (3) die gesamte elektronische Musiknotenständervorrichtung bildet.

7. Elektronische Musiknotenständervorrichtung nach Anspruch 6, dadurch gekennzeichnet, daß der Fuß (2) die elektronische Steuereinheit (8) und die Speichereinheit enthält.

## Revendications

1. Pupitre électronique à musique pour présenter une partition, du type comprenant un écran d'affichage (4), une unité de commande électronique (8), reliée à l'écran d'affichage (4) par l'intermédiaire d'un bus ou de lignes de câblage (23), caractérisé en ce qu'il comprend :
- une unité de mémoire (14, 15) associée à l'unité de commande électronique (8) pour conserver des informations de partitions, sous la forme de données de type de séquence et de position de partition, et
- un dispositif de commande (21), relié à l'unité de commande (8) pour permettre le défilement de la partition présentée sur l'écran (4).

2. Pupitre électronique à musique selon la revendication 1, caractérisé en ce que ledit écran (4) est un écran du type à cristaux liquides et/ou à plasma.

3. Pupitre électronique à musique selon la revendication 1, caractérisé en ce que ledit dispositif de commande (21) est une pédale à bouton-poussoir reliée par un câble électrique (22) à l'unité de commande (8).

4. Pupitre électronique à musique selon la revendication 1, caractérisé en ce que l'unité de mémoire comprend un lecteur de disque magnétique (10).

5. Pupitre électronique à musique selon la revendication 1, caractérisé en ce qu'il comprend en outre, dans l'unité de commande électronique (8), un microprocesseur (13), une mémoire ROM et/ou RAM, une interface d'entrée (16), reliée audit dispositif de commande (21), et une interface de sortie (17), reliée à l'écran d'affichage (4).

6. Pupitre électronique à musique selon la revendication 1, caractérisé en ce qu'il comprend un socle (2) et un pied de support (3) monté sur le socle (2), ledit écran d'affichage (4) étant monté de manière souple sur le haut du pied de support (3) et constituant avec le socle (2) et le pied (3) l'ensemble du pupitre électronique à musique.

7. Pupitre électronique à musique selon la revendication 6, caractérisé en ce que ledit socle (2) contient l'unité de commande électronique (8) et l'unité de mémoire.
